# EUROPÄISCHE PATENTSCHRIFT

(11) **EP 1 182 233 B1**
(45) Veröffentlichungstag und Bekanntmachung des Hinweises auf die Patenterteilung: **08.09.2004**
(21) Anmeldenummer: 01116461.3
(22) Anmeldetag: 07.07.2001
(51) Int. Cl.: C09C 1/30

(54) **Verfahren zur Belegung von Kieselsäuren mit Wachsen**
Method of coating silicic acid with waxes
Méthode pour recouvrir de l'acide silicique avec de la cire

(30) Priorität: 23.08.2000 DE 10041465; 11.05.2001 DE 10122861
(43) Veröffentlichungstag der Anmeldung: 27.02.2002
(73) Patentinhaber: Degussa AG, 40474 Düsseldorf (DE)
(72) Erfinder: Schubert, Jürgen, Dr., 53343 Wachtberg (DE); Hellwig, Klaus-Dieter, 53604 Bad Honnef (DE); Pickel, Michael, 53859 Niederkassel (DE); Pütz, Hans-Dieter, 50129 Bergheim (DE)

(56) Entgegenhaltungen:
- EP-A- 0 541 359
- EP-A- 0 922 671
- WO-A-01/04217
- WO-A-97/08250
- DE-A- 4 032 619
- US-A- 3 816 154

## Beschreibung

Die Erfindung betrifft ein Verfahren zur Belegung von Kieselsäuren mit Wachsen und die Verwendung solcher Kieselsäuren.

Mattierungsmittel für Lacke auf Basis von wachsimprägnierten Kieselsäuren sind bekannt und z. B. in DE 10 06 100, DE 15 92 865 und EP 0 922 671 beschrieben. Hier wird eine Wachsemulsion, ggf. unter Vermittlung eines Dispergators, mit einer Kieselsäuresuspension umgesetzt. Die so erhaltene imprägnierte oder belegte Kieselsäure muss anschließend aufwendig getrocknet werden und enthält zudem oft noch den Dispergator. Weiterhin ist die Anbindung des Wachses an die Kieselsäure für viele Anwendungen nicht ausreichend.

Ein anderes Verfahren zur Kieselsäurebeschichtung mit Wachsen ist in EP 0 442 325 beschrieben. Hier wird die Kieselsäure zunächst mit einem Polyol getränkt, das die Anbindung des hydrophoben Wachses an die hydrophile Kieselsäure erleichtert. Lacke, die imprägnierte Kieselsäure gemäß EP 0 442 325 enthalten, weisen eine unerwünschte hohe Viskosität auf. In Vergleichsbeispielen der EP 0 442 325 wird gezeigt, das nicht oder nur mit Wachs ohne Polyolzusatz beschichtete Kieselsäuren die Viskosität eines Lackes stark herabsetzen. Dies liegt vermutlich an der zu hydrophilen Oberfläche der Kieselsäurepartikel im Vergleich zum hydrophoben Lack. Um diesem Effekt entgegenzuwirken, muss daher ein Polyol zugesetzt werden. Dies ist ein zusätzlicher Verfahrensschritt.

Bei der Verarbeitung von Kieselgelen oder Kieselsolen ist ein thermisches Verfahren gemäß DE 10 06 100 bekannt. Hier werden zunächst Kieselsäurehydrogele hergestellt, getrocknet und in einem weiteren Schritt aktiviert. Das getrocknete Gel wird durch Erhitzen bei ca. 468 - 538 °C aktiviert und mit einem geschmolzenen, mikrokristallinen Wachs bei 371 °C umgesetzt, wobei 15 - 30 Gew.-% Wachs, bezogen auf das Hydrosol eingesetzt werden. Die sehr feinteiligen Hydrosolpartikel weisen eine netzartige Gelstruktur mit einem sehr grossen Wasseranteil auf und sind daher nur mit den beschriebenen hohen Temperaturen bzw. hohen Wachsanteilen zufriedenstellend zu belegen. Die hohe thermische Belastung verbietet den Einsatz vieler Wachse (Farbveränderung), ausserdem ist für eine rasche Abkühlung des so mit Wachs belegten Kieselgels unterhalb die Zersetzungstemperatur des Wachses zu sorgen.

Die Belegung von Kieselsäuren ist in DE 10 06 100 nicht beschrieben.

Kieselsauren und Kieselgele weisen aufgrund der unterschiedlichen Herstellungsprozesse unterschiedliche Strukturen auf. Kieselsäuren werden durch basische Fällung hergestellt und weisen eine offene Struktur der Partikel auf. Aus diesen offenporigen Partikeln kann Wasser leicht entfernt werden. Kieselgele werden dagegen durch saure Fällung gewonnen und besitzen eine eher geschlossene Struktur, aus der Wasser nur schwer entfernt werden kann.

Aufgabe der vorliegenden Erfindung war es daher, ein Verfahren zur Belegung von Kieselsäuren mit Wachsen bereitzustellen, das einfach zu handhaben ist und bei geringem Einsatz von Wachs eine gute Sedimentationsstabilität und Dispergierbarkeit der Kieselsäuren, z. B. in Lacken, ermöglicht.

Gegenstand der vorliegenden Erfindung ist daher ein Verfahren zur Belegung von Kieselsäure mit Wachs, wobei die Belegung der Kieselsäure bei einer Temperatur oberhalb des Schmelzbereichs und unterhalb der Zersetzungstemperatur des Wachses an Luft durchgeführt wird.

Die Belegung der Kieselsäure wird bevorzugt gleichzeitig mit einer Vermahlung, z. B. in einer Prallmühle durchgeführt. Es ist in jedem Fall zweckmässig, die Komponenten Wachs und Kieselsäure vor dem Belegungsschritt in einer geeigneten Mischapparatur (z. B. einem Eirich-Mischer) zu vermischen.

Die Schmelz- und Zersetzungsbereiche der im erfindungsgemäßen Verfahren einsetzbaren Wachse liegen zwischen 40 und 250 °C, bevorzugt 60 und 200 °C, ganz besonders bevorzugt 70 und 130 °C. Das erfindungsgemäße Verfahren wird bevorzugt bei diesen Temperaturen ausgeübt. Es ist möglich, mit entsprechend vorgeheizter Luft oder geheizten Inertgasen zu arbeiten

Geeignete Kieselsäure sind die in den Beispielen beschriebenen Fällungskieselsäuren. Es eignen sich jedoch auch entsprechende Aerosile. Im erfindungsgemäßen Verfahren können zur Belegung Polyethylen (PE)-Wachse, Fischer-Tropsch-Wachse oder Wachse auf Silicon-Basis eingesetzt werden. Die Belegung von Kieselsäure mit 2 bis 15 Gew.-%, bevorzugt 5 bis 10 Gew.-% Wachs, bezogen auf die Kieselsäure, hat sich in der Praxis bewährt.

Die erfindungsgemäß belegten Kieselsäuren können als Mattierungsmittel für Lacke wie Alkydharzlacke oder sonstige Einbrennlacke verwendet werden.

### Allgemeine Verfahrensbeschreibung

In einem Mischaggregat (z.B. Eirich-Mischer) werden Fällungskieselsäure und ein Coatungsmittel (Wachs) im Verhältnis 3 Gew.-% bis 15 Gew.-% innig miteinander gemischt. Diese Mischung wird in einer Sichtermühle (z.B. 50 ZPS oder ähnliche) oder Strahlmühle vermahlen und gesichtet. Während der Mahlung wird der Mahlraum durch das Eindüsen von beheizter Luft (60 - 160 °C) so aufgeheizt, daß am Mühlenausgang die Luft noch eine Temperatur von 40 - 140 °C aufweist. Das Produkt wird über einen Filter oder Zyklonabscheider abgeschieden. Das mit dem Coatungsmittel belegte Produkt zeigt einen Kohlenstoffgehalt von 2 bis 18 Gew.-%, bevorzugt 3-10 Gew.-%, besonders bevorzugt 3-6 Gew.-%. Über eine nachgeschaltete Sichtung kann die Kornfraktion eingestellt werden.

### Ausführungsbeispiele:

### Beispiel 1

Daten der verwendeten Kieselsäure und des verwendeten Coatingmittels

**Tabelle 1**

| Kieselsäure | | Coatungmittel | |
|---|---|---|---|
| BET [m²/g] | 200 | Mikropulver [µm] | 8,5 |
| DBP [g/100g] | 230 | Schmelzpunkt (DSC) [°C] | 110-118 |
| d10 | 4,66 | Schmelzviskosität bei 120 °C [mm²/s] | 135-240 |
| d50 | 9,11 | Molare Masse (GPC) [g/mol] | ca. 3500 |
| d90 | 23,10 | Dichte bei 23°C [g/cm³] | 0,940-0,955 |

Die Fällungskieselsäure aus Tabelle 1 wird mit 6 Gew.-% PE-Wachs (Tabelle 1) vermischt. Das Gemisch wird unter Variation der Prozeßparameter, wie Sichter--, Mühlendrehzahl oder Mahlluft, in einer Zirkoplex-Sichtermühle 50 ZPS, Fa. Alpine, bei 120 °C Austrittstemperatur der Mahlluft (gemessen am Mühlenausgang) vermahlen. Die Versuchsparameter, die physikalisch-chemischen Daten und die lacktechnischen Ergebnisse, die in schwarzem Einbrennlack erhalten werden, sind in Tabelle 2 aufgelistet.

**Tabelle 2**

| | | |
|---|---|---|
| Sichterdrehzahl | [min⁻¹] | 10500 |
| Mühlendrehzahl | [min⁻¹] | 9500 |
| d₁₀ | [µm] | 2,82 |
| d₅₀ | [µm] | 5,24 |
| d₉₀ | [µm] | 8,91 |
| C-Gehalt | [%] | 3,3 |
| Grindometerwert | [µm] | 30 |
| Glanz 60° | | 19,7 |
| Glanz 60 rel. z. Std. | | 1,7 |
| Sedimentation | | 2- |

### Beispiel 2 - Variation der Kieselsäure und der Coatungstemperatur

Eine Fällungskieselsäure, z.B. Sipernat 50, wird mit einem PE-Wachs, z.B. AF 30 (FA. BASF), im Verhältnis 6 Teile Wachs und 94 Teile Kieselsäure innig vermischt. Dieses Gemisch wird in eine Prallsichtermühle (ZPS 50) dosiert. Die Prallsichtermühle wird während der Vermahlung mit vorgeheizter Mahlluft betrieben. Die Austrittstemperatur der Mahlluft aus der Mühle wird variiert. Die Mahleinstellungen (Drehzahl Sichterrad und Mühle) sind für die Coatung der Kieselsäure mit Wachs nicht entscheidend, werden aber so gewählt, dass das Produkt eine Verteilung aufweist, die für die gewünschte Mattierungseffizienz geeignet ist.

### Kenngrößen der eingesetzten Kieselsäure

| Kenngrößen der eingesetzten Kieselsäure | |
|---|---|
| BET-Oberfläche [m ² /g] | 450 |
| Mittl. Teilchengröße [µm] | 27 (Messgerät: Coulter LS 230) |
| Stampfdichte [g/l] | 180 (nicht gesiebt) |
| Trocknungsverlust [%] | 6,0 (2 h bei 105 °C) |
| Glühverlust [%] | 5,0 (2 h bei 1000 °C) |
| pH-Wert | 6,0 (5%ig in Wasser) |
| DBP-Absorption [g/100g] | 335,0 |

**Tabelle 3**

| **Austrittstemperatur** | **[°C]** | **120** | **100** | **80** |
|---|---|---|---|---|
| Wachsname | | AF 30 | AF 30 | AF 30 |
| d10 * | [µm] | 4,48 | 4,63 | 4,67 |
| d50 * | [µm] | 8,44 | 8,88 | 8,54 |
| d90 * | [µm] | 13,96 | 14,63 | 14,05 |
| C-Gehalt | [%] | 5,48 | 5,94 | 5,67 |
| Grindometerwert | [µm] | 25 | 30 | 27 |
| Glanz 60° rel. z. Std. ** | [%] | -5,5 | 1,7 | 0,8 |
| Sedimentation *** | | 2 | 2 | 5 |
| Wachsablösung | | Keine | Keine | - |

| | | | | |
|---|---|---|---|---|
| * Messgerät: Coulter LS 230 | | | | |
| ** Standard: Acematt HK 460, Fa. Degussa AG | | | | |

### Beispiel 3 - Variation des Wachses bzw. der Erweichungstemperatur des Wachses

Die Versuchsdurchführung erfolgt wie in Beispiel 2 beschrieben. Es werden Wachse mit einem niedrigeren Erweichungspunkt als das in Beispiel 2 verwendete eingesetzt.

**Tabelle 4**

| **Wachs** | **Hersteller** | **Erweichungspkt. [°C]** |
|---|---|---|
| AF 30 | Fa. BASF | 105 - 112 |
| SL 555 | Fa. Daniel Products | 82 - 86 |
| Aquabead 916 | Fa. Micropowders | 64 - 67 |

**Tabelle 5**

| **Wachsname** | | **AF 30** | **SL 555** | **Aquabead 916** |
|---|---|---|---|---|
| Austrittstemperatur | [°C] | 120 | 120 | 120 |
| d10 * | [µm] | 4,48 | 4,57 | 4,58 |
| d50 * | [µm] | 8,44 | 8,88 | 8,98 |
| d90 * | [µm] | 13,96 | 14,84 | 15,29 |
| C-Gehalt | [%] | 5,48 | 5,31 | 4,97 |
| Grindometerwert | [µm] | 25 | 28 | 29 |
| Glanz 60° rel. z. Std.** | [%] | -5,5 | -4,9 | -5,5 |
| Sedimentation *** | | 2 | 2 | 2 |
| Wachsablösung | | keine | keine | keine |

**Tabelle 6**

| **Wachsname** | | **AF 30** | **SL 555** | **Aquabead 916** |
|---|---|---|---|---|
| Austrittstemperatur | [°C] | 100 | 100 | 100 |
| d10 * | [µm] | 4,57 | 4,46 | 4,13 |
| d50 * | [µm] | 8,88 | 8,77 | 7,76 |
| d90 * | [µm] | 14,63 | 13,31 | 11,83 |
| C-Gehalt | [%] | 5,94 | 5,69 | 4,97 |
| Grindometerwert | [µm] | 30 | 29 | 31 |
| Glanz 60° rel. z. Std.** | [%] | 1,7 | 0,5 | -0,1 |
| Sedimentation *** | | 2 | 2 | 2 |
| Wachsablösung | | keine | keine | keine |

**Tabelle 7**

| **Wachsname** | | **AF 30** | **SL 555** | **Aquabead 916** |
|---|---|---|---|---|
| Austrittstemperatur | [°C] | 80 | 80 | 80 |
| d10 * | [µm] | 4,67 | 4,18 | 4,15 |
| d50 * | [µm] | 8,54 | 8,17 | 7,79 |
| d90 * | [µm] | 14,05 | 12,56 | 11,75 |
| C-Gehalt | [%] | 5,67 | 5,79 | 4,76 |
| Grindometerwert | [µm] | 27 | 27 | 31 |
| Glanz 60° rel. z. Std.** | [%] | 0,8 | 1,1 | -1,2 |
| Sedimentation | | 5 | 2 | 2 |
| Wachsablösung | | - | keine | keine |

| | | | | |
|---|---|---|---|---|
| * Messgerät: Coulter LS 230 | | | | |
| ** Standard: Acematt HK 460, Fa. Degussa AG | | | | |

### Analysemethoden:

### Sedimenation

Ca. 40 g mattierter Lack wird in Glasflaschen gefüllt, die Glasflaschen werden verschraubt. Die Proben werden 10 d bei 50 ±2 °C in einem Trockenschrank gelagert.
Zur Beurteilung werden die Glasflaschen auf Raumtemperatur abgekühlt.
Um die Beschaffenheit des Bodensatzes zu prüfen, werden die Glasflaschen auf den Kopf gestellt und das Ablaufen der Mattierungsmittelhaltigen Phase beobachtet.
Anschließend werden die Glasflaschen 2 mal mit der Hand geschüttelt. Ist visuell kein Bodensatz zu erkennen, wird mit der Nadel am Boden der Flasche gekratzt. Mit dieser Behandlung werden auch noch hauchdünne, unerwünschte Ablagerungen festgestellt.

Die Beschaffenheit des Bodensatzes wird folgendermaßen benotet:

| **Note** | **Beurteilung** |
|---|---|
| 1 | keine Trennung von Lack und Mattierungsmittel |
| 2 | lockerer Bodensatz (Das Sediment läuft völlig vom Boden ab und läßt sich durch ein- bis zweimaliges Umschwenken dispergieren.) |
| 3 | weicher Bodensatz (Das Sediment läuft nicht vollständig vom Boden ab, kann aber durch mehrfaches Schütteln noch dispergiert werden.) |
| 4 | weicher Bodensatz, schwer aufrührbar (Das Sediment ist noch weich, aber bereits so stark agglomeriert, daß es durch Schütteln nicht mehr ausreichend dispergiert werden kann.) |
| 5 | fester Bodensatz. |

### Wachsablösung

1 g Mattierungsmittel und 35 g Ethoxypropylacetat werden in eine 50 ml Weithalsschraubflasche eingwogen. Der Deckel wird verschlossen und die Flasche von Hand geschüttelt. Die Flasche wird über Nacht bei 50 °C getempert.
Löst sich das Wachs unter diesen Bedingungen vom Mattierungsmittel, so schwimmt es auf dem Lösungsmittel, das Mattierungsmittel setzt sich am Boden ab.
Erfolgt keine Wachsablösung, so gibt es nur ein Sediment von Mattierungsmittel am Boden.

Die Beispiele zeigen, dass die erfindungsgemäße Belegung über dem Schmelzbereich des Wachses durchgeführt werden muss. Die Bezeichnungen "Schmelzbereich" und "Erweichungspunkt" sind hier synonym zu verstehen.

## Patentansprüche

1. Verfahren zur Belegung von Kieselsäuren mit Wachs,
**dadurch gekennzeichnet,**
**dass** eine Kieselsäure mit Wachs derart belegt wird, dass
- die Belegung gleichzeitig mit einer Vermahlung erfolgt
- die Temperatur im Mahlraum während der Belegung und Vermahlung durch Eindüsen von beheizter Luft oder Inertgas mit einer Temperatur von 60 - 160 °C, wobei die Temperatur der Luft oder des Inertgases am Mühlenausgang noch 40 - 140 °C beträgt, derart geregelt wird, dass die Belegung und Vermahlung bei einer Temperatur oberhalb des Schmelzbereichs und unterhalb des Zersetzungsbereichs des Wachses an Luft erfolgt.

2. Verfahren nach Anspruch 1,
**dadurch gekennzeichnet,**
**dass** die Belegung bei einer Temperatur im Bereich von 70 - 130 °C durchgeführt wird.

3. Verfahren nach Anspruch 1 oder 2,
**dadurch gekennzeichnet,**
**dass** die Kieselsäure zunächst mit dem Wachs vermischt und anschließend bei einer Temperatur gemäß Anspruch 1 oder 2 gleichzeitig vermahlen und mit dem Wachs belegt wird.

4. Verfahren nach einem der Ansprüche 1 bis 3,
**dadurch gekennzeichnet,**
**dass** es sich bei der Kieselsäure um eine Fällungskieselsäure handelt.

5. Verfahren nach einem der Ansprüche 1 bis 3,
**dadurch gekennzeichnet,**
**dass** es sich bei der Kieselsäure um ein Aerosil handelt.

6. Verfahren nach einem der Ansprüche 1 bis 5,
**dadurch gekennzeichnet,**
**dass** 2 - 15 Gew. % Wachs, bezogen auf die Kieselsäure, eingesetzt werden.

7. Verfahren nach einem der Ansprüche 1 - 6,
**dadurch gekennzeichnet,**
**dass** es sich bei dem Wachs um einen Polyethylenwachs handelt.

8. Verfahren nach einem der Ansprüche 1 - 6,
**dadurch gekennzeichnet,**
**dass** es sich bei dem Wachs um einen Fischer-Tropsch-Wachs handelt.

9. Verfahren nach einem der Ansprüche 1 - 6,
**dadurch gekennzeichnet,**
**dass** es sich bei dem Wachs um einen Wachs auf Silicon-Basis handelt.

10. Mit Wachs belegte Kieselsäuren, hergestellt nach einem Verfahren gemäß einem der Ansprüche 1 - 9,
**dadurch gekennzeichnet,**
**dass** sie einen Kohlenstoffgehalt von 2 - 18 Gew. % aufweisen.

11. Verwendung einer Kieselsäure nach Anspruch 10 als Mattierungsmittel in Lacken.

## Claims

1. A process for coating silica with wax, **characterized in that** a silica is coated with wax such that
- coating takes place simultaneously with a milling
- the temperature in the milling chamber during coating and milling is regulated, by introduction of heated air or inert gas with a temperature of from 60 to 160°C through a nozzle, the temperature of the air or inert gas still being from 40 to 140°C at the mill exit, in such a way that coating and milling take place at a temperature above the melting range and below the decomposition range of the wax in air.

2. A process according to claim 1, **characterized in that** coating is carried out at a temperature in the range from 70 to 130°C.

3. A process according to either of claims 1 and 2, **characterized in that** the silica is first mixed with the wax and then simultaneously milled and coated with the wax at a temperature as set forth in claim 1 or 2.

4. A process according to any one of claims 1 to 3, **characterized in that** the silica is a precipitated silica.

5. A process according to any one of claims 1 to 3, **characterized in that** the silica is an Aerosil.

6. A process according to any one of claims 1 to 5, **characterized in that** from 2 to 15% by weight, based on the silica, of wax is used.

7. A process according to any one of claims 1 to 6, **characterized in that** the wax is a polyethylene wax.

8. A process according to any one of claims 1 to 6, **characterized in that** the wax is a Fischer-Tropsch wax.

9. A process according to any one of claims 1 to 6, **characterized in that** the wax is a silicone-based wax.

10. A wax-coated silica produced by a process according to any one of claims 1 to 9, **characterized in that** it has a carbon content of from 2 to 18% by weight.

11. Use of a silica according to claim 10 as a dulling agent in a finish.

## Revendications

1. Procédé de revêtement d'acides siliciques avec de la cire,
**caractérisé en ce qu'**
un acide silicique est revêtu de cire de telle façon que
- le revêtement s'effectue en même temps qu'un broyage,
- la température dans l'espace de broyage est réglée pendant le revêtement et le broyage par injection d'air chauffé ou de gaz inerte chauffé à une température de 60 à 160°C, la température de l'air ou du gaz inerte s'élevant encore, à la sortie du broyeur, entre 40 et 140°C, de telle manière que le revêtement et le broyage s'effectuent à une température à l'air supérieure à la plage de fusion et inférieure à la plage de décomposition de la cire.

2. Procédé selon la revendication 1,
**caractérisé en ce que**
le revêtement s'effectue à une température dans l'intervalle de 70 à 130°C.

3. Procédé selon la revendication 1 ou 2,
**caractérisé en ce que**
l'acide silicique est d'abord mélangé avec la cire, puis est broyé en même temps à une température selon la revendication 1 ou 2 et est revêtu avec la cire.

4. Procédé selon l'une quelconque des revendications 1 à 3,
**caractérisé en ce qu'**
il s'agit, pour l'acide silicique, d'un acide silicique de précipitation.

5. Procédé selon l'une quelconque des revendications 1 à 3,
**caractérisé en ce qu'**
il s'agit, pour l'acide silicique, d'un aérosil.

6. Procédé selon l'une quelconque des revendications 1 à 5,
**caractérisé en ce qu'**
on utilise 2 à 15 % en poids de cire, sur base de l'acide silicique.

7. Procédé selon l'une quelconque des revendications 1 à 6,
**caractérisé en ce que**
pour la cire, il s'agit d'une cire de polyéthylène.

8. Procédé selon l'une quelconque des revendications 1 à 6,
**caractérisé en ce que**
pour la cire, il s'agit d'une cire de Fischer-Tropsch.

9. Procédé selon l'une quelconque des revendications 1 à 6,
**caractérisé en ce que**
pour la cire, il s'agit d'une cire à base de silicone.

10. Acides siliciques revêtus de cire, fabriqués selon un procédé selon l'une quelconque des revendications 1 à 9,
**caractérisés en ce qu'**
ils présentent une teneur en carbone de 2 à 18 % en poids.

11. Utilisation d'un acide silicique selon la revendication 10, comme agent de matage dans des peintures.
